# EUROPEAN PATENT SPECIFICATION

(11) **EP 0 478 515 B1**
(45) Date of publication and mention of the grant of the patent: **17.05.1995**
(21) Application number: 91830382.7
(22) Date of filing: 18.09.1991
(51) Int. Cl.: B60T 15/24

(54) **Trailer Control Valve**
Anhänger-Steuerventil
Valve de commande pour remorques

(30) Priority: 24.09.1990 IT 6770890
(43) Date of publication of application: 01.04.1992
(73) Proprietor: KNORR-BREMSE SISTEMI PER AUTOVEICOLI COMMERCIALI S.P.A., 20043 Arcore (Milano) (IT)
(72) Inventor: Angelillo, Domenico, I-20099 Sesto S. Giovanni (Milano) (IT)
(74) Representative: Quinterno, Giuseppe

(56) References cited:
- EP-A- 0 223 935
- EP-A- 0 308 375
- DE-A- 3 722 306
- DE-A- 3 818 688

## Description

The present invention relates to a valve unit for use in a pneumatic braking system for a tractor, of the type with two pipes, a supply pipe and an operating pipe respectively, to control the braking of a trailer.

More specifically, the invention relates to a valve unit including a hollow body in which are defined:
a supply chamber which is intended to be connected to a pressure source by means of a supply aperture in the body and to a pipe for supplying pressure to the braking system of the trailer by means of an outlet aperture,
a discharge chamber which communicates with the atmosphere,
adjacent first and second operating chambers which are intended to receive a brake-operating pressure through respective inlet apertures during service braking, and
an output chamber which is intended to be connected to a pipe for supplying the brake-operating pressure to the braking system of the trailer,
the body having relay valve means which are controlled by the pressure in the first and/or second operating chambers, the relay valve means including:
an obturator unit which is movable in the body and is adapted to cooperate with first and second valve seats in order to control communication between the output chamber and the discharge chamber and between the output chamber and the supply chamber, and
first and second piston control means which are sealingly slidable between the output chamber and the first and second operating chambers respectively, and are adapted, under the operating pressures supplied to the first and second operating chambers respectively, to control the position of the obturator unit so that the output chamber is disconnected from the discharge chamber and connected to the supply chamber during service braking,
the body also having a stop valve including a seat between the inlet aperture and the outlet aperture of the supply chamber and an obturator which is associated with the obturator unit of the relay valve means,
the second piston means including a control piston which, when the pressure difference between the second operating chamber and the output chamber exceeds a predetermined value, can intervene to urge the obturator unit to a position in which it closes the stop valve and opens the second seat of the relay valve means, enabling communication between the outlet of the supply chamber and the output chamber.

Valve units of this type (known as double- or triple-control servo-distributors with incorporated servo-diverters) are known in which, if there is a break in the pipe for operating the trailer braking, the stop valve interrupts the supply of pressure to the reservoirs of the trailer and puts the pipe for supplying the reservoirs of the trailer into communication with the atmosphere. This causes the trailer to be braked automatically (in known manner).

A valve unit having the aforesaid characteristics, but in which the two operating chambers are at opposite ends of the body rather than adjacent (which difference does not, however, affect the way in which it operates) is described in prior European patent application No. EP-A-0 308 375.

In these known valve units, the first and second operating chambers are connected respectively to the outlets of the first and second sections of a duplex distributor (the brake-operating valve) which, when operated by the brake pedal, operates the braking in the two independent braking circuits of the tractor.

Some front valve units of this type can brake the trailer automatically if a break or leak occurs simultaneously in both the pipe for operating the trailer braking and in a pipe which supplies the pressure to one of the two operating chambers (typically the first) of the valve unit; the trailer is not braked automatically if there is a break in the pipe which supplies the operating pressure to the other chamber.

The object of the present invention is therefore to provide a valve unit of the type defined above which enables the trailer to be braked automatically equally well if breaks or leaks occur in the pipe for operating the trailer braking and in either of the pipes which supply the braking pressure to the two operating chambers of the valve unit.

According to the invention, this object is achieved by means of a valve unit of the type specified above, the main characteristic of which lies in the fact that the first piston control means include two coaxial pistons, which are exposed at one end and at the opposite end, respectively, to the pressures in the first and second operating chambers respectively and which are adapted to cooperate with the second piston means during service braking so that, in the event of a loss of or a reduction in the pressure supplied to the second operating chamber, one of the coaxial pistons, under the pressure in the first operating chamber, can urge the control piston to the position in which it closes the stop valve and opens the second seat of the relay valve means.

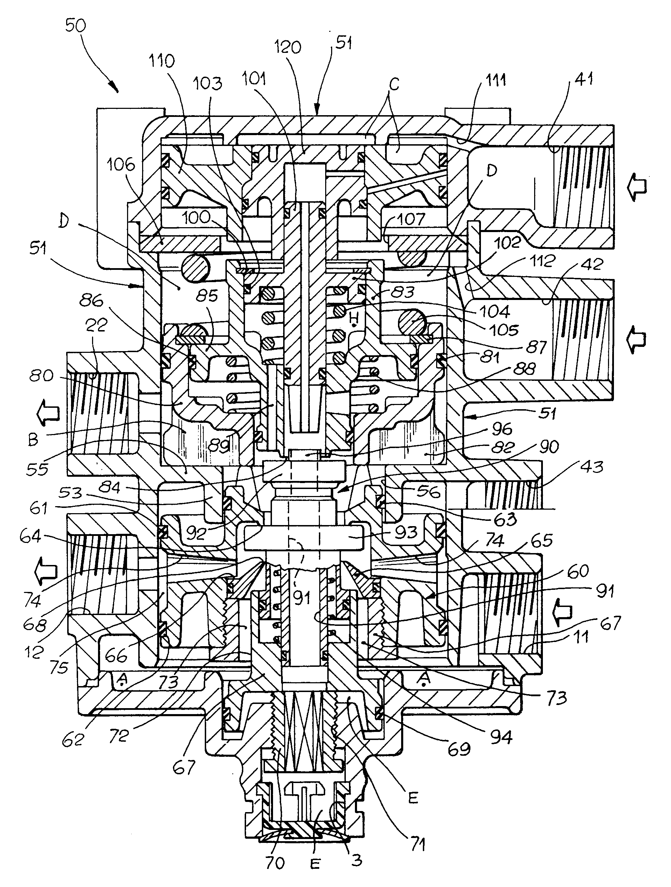

Further characteristics and advantages of the invention will become clear from the detailed description which follows with reference to the appended drawing, which is provided purely by way of non-limiting example and shows an axial section of a valve unit according to the invention.

In the drawing, a triple-control servo-distributor according to the present invention is generally indicated 50. It includes a body 51 which, in the embodiment illustrated, is substantially in the shape of an elongate cylinder. The body is hollow and, in its lower portion, has a supply connector 11 for connection to a pressure reservoir of the braking system of a tractor. An outlet connector, indicated 12, is intended to be connected to the pipe (the automatic pipe) for supplying the pressure to the reservoirs of the braking system of a trailer.

Further inlet connectors at the upper end of the body 51 are indicated 41 and 42. These connectors are intended to be connected to the respective outlets of the two sections of a duplex distributor (the brake-operating valve) which, when operated by the brake pedal, operates the braking in the two independent braking circuits of the tractor.

Below the connectors 41 and 42, the body 51 has a further inlet connector 43. This connector is intended to be connected to a manually-operated valve or distributor for operating the parking and emergency braking.

A further outlet connector, above the outlet connector 12, is indicated 22. The connector 22 is intended to be connected to a pipe (the moderable pipe) which is intended to supply the brake-operating pressure to the braking system of the trailer.

Finally, there is a discharge aperture 3 in the base wall of the body 51.

For ease of reading by experts in the art, the connectors and apertures in the body 51 described above have been identified by reference numerals corresponding to international norms for identifying the orifices in equipment for braking systems.

The axial portion of the body 51 between the connectors 22 and 43 has a transverse wall 55 with a central hole 56 from the edge of which a tubular appendage 53 extends downwardly.

A piston, generally indicated 60, is mounted inside the lower portion of the body 51 between the wall 55 and the base wall of the body. The piston 60 bears two external sealing rings 61 and 62 which enable it to slide sealingly relative to the wall of the body 51. The body 60 has an upper portion with a smaller diameter which carries a sealing ring 63 and is engaged in the tubular appendage 53 of the wall 55.

The piston 60 is hollow axially and its upper end forms a downwardly-facing valve seat 64.

A frusto-conical annular element, indicated 65, is mounted in the cavity of the piston 60 between a shoulder 66 thereof and a substantially tubular clamping element 67 which is screwed into the lower portion of the axial duct in the piston 60.

The upper edge, indicated 68, of the annular element 65 constitutes a further upwardly-facing valve seat.

The element 67 has a lower portion with an external sealing ring 69 mounted sealingly in a central tubular portion of the base wall of the body 51. In the condition shown in the drawing, the bottom of the element 67 bears on an externally threaded bush 70 which is screwed into an axial hole 71 in the base wall of the body 51, in an axially adjustable position.

The element 67 has an axially intermediate portion 72 with a smaller diameter. The upper portion of the element, which is screwed into the piston 60, has a series of through holes 73 arranged in a circle and parallel to the axis of the body 51, their upper ends opening into the interior of the conical annular element 65 and their lower ends into a region or chamber A (referred to below as the supply chamber) which communicates with the inlet connector 11.

The piston 60 has a plurality of radial holes 74 which put that region of its interior which is above the valve seat 68 into communication with an annular region 75 defined between the internal surface of the body 51 and the external side surface of the portion of the piston 60 between the sealing rings 61 and 62. The annular space 75 communicates permanently with the outlet aperture 12.

A movable device, generally indicated 90, mounted in the piston 60, has an axial passage 91, part of which is shown in broken outline. The device has a head 92 which extends above the valve seat 64 and is intended to act as a valve obturator, as will become clearer from the following.

The central portion of the movable device 90 has a ring 93 one side of which faces the valve seat 64 and the other side of which faces the valve seat 68. The ring can cooperate with one or other valve seat in two different axial positions of the movable device 90, so as to act as an obturator.

Below the ring 93, the movable device 90 has a portion which extends into the seat 68 with radial clearance and is thus sealingly slidable in a central cavity of the clamping element 67 which is fixed to the piston 60. The lower end of a helical spring 94 reacts against the element 67 and urges the movable device to the position shown in the drawing, in which the ring 93 closes the valve seat 64, leaving the valve seat 68 open. In this condition, the inlet connector 11 communicates with the outlet connector 12 through the supply chamber A, the holes 73 in the element 67, the annular space defined between the movable device 90 and the valve seat 68, the radial holes 74 in the piston 60 and the annular space 75.

Above the wall 55 in the body 51 is a tubular piston 80 with an upper portion of larger diameter which has an external sealing ring 81 and is sealingly slidable in the body 51, and a lower portion of smaller diameter, smaller than that of the hole 56 in the tranverse wall 55, and having external radial fins 82. In the condition shown in the drawing, the fins act against the wall 55 of the body 51.

A further piston, indicated 83, is sealingly slidable in the piston 80. The piston 83 has a central, axially hollow hub, the lower portion of which is sealingly slidable in the smaller-diameter portion of the piston 80 and forms a lower valve seat, indicated 84, which faces the head 92 of the movable device 90.

The central region of the piston 83 has an external circular, flange-like portion 85 which has a sealing ring 86 and is slidable in the larger-diameter portion of the piston 80, below a stop ring 87 carried by the top of the piston.

A helical spring 88 is disposed in the piston 80 below the flanged portion 85 of the piston 83 and urges the latter piston upwardly.

An axial hole in the wall of the lower portion of the hub of the piston 83 is indicated 89. The lower end of the hole 89 opens outwardly of the valve seat 84.

The upper portion of the hub of the piston 83 carries a stop ring 100 below which a control piston 101 is slidable in the piston. The piston has a hub the lower end of which is sealingly slidable in the axial passage in the lower portion of the piston 83 and faces an annular projection 96 on the movable device 90, the projection extending into the valve seat 84 with radial clearance.

A flange 102 extends from the central region of the hub of the piston 101 and has a sealing ring 103 which is sealingly slidable in the upper portion of the piston 83. A chamber H of variable volume defined between the flange of the piston 101 and the internal surface of the piston 83 contains a helical spring 104 which urges the control piston 101 against the stop ring 100.

The chamber H communicates permanently, through the hole 89 in the piston 83, with a chamber B (referred to below as the output chamber) between the piston 83, the wall 53-55 of the body, the piston 60 and the movable device 90. The chamber B communicates permanently with the outlet connector 22.

A transverse wall 106 with a central hole 107 extends in the body 51 between the inlet connectors 41 and 42.

A helical spring 105 is disposed between the wall 106 and the stop ring 87 carried by the piston 80.

A annular piston 110, in which a coaxial piston 120 is sealingly slidable, can slide sealingly in the body 51 above the wall 106.

As can be seen from the drawing, the diameter of the central hole in the piston 110 is smaller at the top and larger at the bottom. The piston 120 correspondingly has a smaller-diameter upper portion and a larger-diameter portion. By virtue of these characteristics of shape, the piston 120 can slide downwardly relative to the piston 110 in operation.

The lower edge of the piston 110 extends into the hole 107 in the wall 106 and faces the upper edge of the piston 83.

The piston 120 has a lower, central, axial cavity in which the upper portion of the hub of the control piston 101 is sealingly slidable.

A region or chamber of variable volume, indicated C, is defined in the body 51 between its upper wall and the pistons 110 and 120. This chamber communicates permanently with the inlet connector 41 through a duct 111.

A further chamber of variable volume, indicated D, is defined in the body 51 between the pistons 110, 120, 101, 83 and 80. This region or chamber D communicates permanently with the inlet connector 42 through a duct 112.

Finally, a discharge chamber, indicated E, is defined in the aperture 3 in the lower portion of the body 51.

The valve unit described above operates in the following manner.

In the drawing, the valve unit is shown in the condition it adopts at rest when the the tractor is running normally. In this situation, no pressure is supplied to the inlet connectors 41 and 42 but the connector 43 is supplied with compressed air from the normal valve or distributor for operating the parking and emergency brakes. This pressure acts on the piston 60, keeping it in the position shown.

Compressed air is supplied from the reservoirs of the tractor to the inlet connector 11. This compressed air reaches the outlet connector 12 through the chamber A, the holes 73, the seat 68, the holes 74 and the annular space 75 and then continues towards the reservoirs of the trailer.

With reference to the movable device 90, the head 92 is spaced from the seat 84, so that the output chamber B is actually in communication with the atmosphere through the valve 84-92 which is open and through the axial duct 91 in the movable device 90. The ring 93 of the movable device is urged against the valve seat 64, so that the chambers A and B are disconnected from each other. No pressure is therefore supplied to the moderable pipe for operating the trailer braking, which is connected to the connector 22.

If the brake pedal of the tractor is now operated, pressure is supplied to the chambers C and D through the connectors 41 and 42. The pressure in the chamber C causes the pistons 110 and 120 to descend together, and the pressure in the chamber D causes the pistons 101 and 83 to descend. As soon as the seat 84 of the piston 83 reaches the head 92 of the movable device 90, the chamber B is disconnected from the discharge chamber E. The further descent of the pistons lowers the movable device 90 and, in particular, moves the ring 93 away from the valve seat 64 so that the chamber B is put into communication with the chamber A. A flow of compressed air from the chamber A reaches the chamber B though the moderable pipe connected to the connector 22 and brakes the trailer.

At all times, the pressure in the variable-volume chamber, indicated H, between the pistons 101 and 83 is that which prevails in the output chamber B. In fact, as already stated, the chamber H communicates with the chamber B through the duct 89 in the piston 83.

If the moderable pipe for operating the trailer brakes is broken, there is a loss of pressure in the chambers B and H during service braking. The control piston 101 therefore moves further downwardly until it pushes the movable device 90 to the position in which the ring 93 closes the valve seat 68. In this condition, the communication between the inlet connector 11 and the outlet connector 12 is broken. Moreover, the outlet connector 12 is put into communication with the chamber B and hence with the atmosphere. In particular, communication with the atmosphere is achieved both through the break in the moderable pipe and through the duct 91 of the movable device 90 and the discharge chamber E. The automatic pipe connected to the connector 12 is thus discharged rapidly to the atmosphere and this causes the the trailer to be braked automatically in known manner.

The valve unit according to the invention enables the trailer to be braked automatically even when breaks or leaks occur simultaneously in the moderable pipe from the connector 22 to the trailer and in either of the pipes which supply the brake-operating pressure from the duplex distributor to the inlet connectors 41 and 42. In fact, if a break or leak occurs in the pipe connected to the connector 41, the operating pressure supplied to the connector 42 causes the control piston 101 to move down further until the movable device 90 is brought to the position in which its ring 93 opens the seat 64 and closes the seat 68.

If a break occurs in the pipe connected to the inlet connector 42, the pressure supplied to the connector 41 causes the pistons 110 and 120 to descend further until the piston 110 is brought into contact with the piston 83. At this point the operating pressure supplied to the connector 41 causes the central piston 120 alone to descend further until it causes the control piston 101 to move downwardly until the movable device 90 is brought to the position in which it opens the valve seat 64 and closes the valve seat 68. The valve unit according to the invention is thus intrinsically safer than prior devices.

Naturally, the principle of the invention remaining the same, the forms of embodiment and details of construction may be varied widely with respect to those described and illustrated purely by way of non-limiting example, without thereby departing from the scope of the present invention.

## Claims

1. A valve unit for a pneumatic braking system for a tractor, of the type with two pipes, a supply pipe and an operating pipe respectively, for controlling the braking of a trailer, the unit including a hollow body (51) in which are defined:
a supply chamber (A) which is intended to be connected to a pressure source by means of a supply aperture (11) in the body (51) and to a pipe for supplying pressure to the braking system of the trailer by means of an outlet aperture (12),
a discharge chamber (E) which can communicate with the atmosphere,
adjacent first and second operating chambers (C, D) which are intended to receive a brake-operating pressure through respective inlet apertures (41, 42), during service braking, and
an output chamber (B) which is intended to be connected to a pipe for supplying the brake-operating pressure to the braking system of the trailer,
the body (51) having relay valve means (84, 90, 64) which are controlled by the pressure in the first and/or second operating chambers (C, D), the relay valve means including:
an obturator unit (90) which is movable in the body (51) and is adapted to cooperate with first and second valve seats (84, 64) in order to control communication between the output chamber (B) and the discharge chamber (E) and between the output chamber (B) and the supply chamber (A), and
first and second piston control means (110, 120; 80, 83, 101) which are sealingly slidable between the output chamber (B) and the first and second operating chambers (C, D) respectively, and are adapted, under the operating pressures supplied to the first and second control chambers (C, D) respectively, to control the position of the obturator unit (90) so that the output chamber (B) is disconnected from the discharge chamber (E) and connected to the supply chamber (A) during service braking,
the body (51) also having a stop valve (93, 68) including a seat (68) between the inlet aperture (11) and the outlet aperture (12) of the supply chamber (A) and an obturator (93) which is associated with the obturator unit (90) of the relay valve means (84, 90, 64),
the second piston control means (80, 83, 101) including a control piston (101) which, when the pressure difference between the second operating chamber (D) and the output chamber (B) exceeds a predetermined value, can intervene to urge the obturator unit (90) to a position in which it closes the stop valve (93, 68) and opens the second seat (64) of the relay valve means (84, 90, 64), enabling communication between the outlet aperture (12) of the supply chamber (A) and the output chamber (B),
characterised in that the first piston control means includes two coaxial pistons (110, 120), which are exposed at one end and at the opposite end, respectively, to the pressures in the first and second operating chambers (C, D) respectively and which are adapted to cooperate with the second piston means (80, 83, 101) during service braking so that, in the event of a loss of or a reduction in the pressure supplied to the second operating chamber (D), one of the coaxial pistons - under the pressure in the first operating chamber (C) - can urge the control piston (101) to the position in which it closes the stop valve (93, 68) and opens the second seat (64) of the relay valve means (84, 90, 64).

## Patentansprüche

1. Ventileinheit für ein pneumatisches Bremssystem für ein Zugfahrzeug, der Gattung mit zwei Leitungen, einer Zuführleitung bzw. einer Betriebsleitung, zum Steuern des Bremsvorganges eines Anhängers, wobei die Ventileinheit einen Hohlkörper (51) aufweist, in dem folgendes ausgebildet ist:
eine Zuleitungskammer (A), welche mittels einer Zuleitungsöffnung (11) im Körper (51) mit einer Druckquelle verbunden werden soll sowie mit einer Leitung zum Zuführen von Druck mittels einer Auslaßlöffnung (12) an das Bremssystem des Anhängers,
eine Ablaßkammer (E), die mit der Atmosphäre in Verbindung stehen kann,
benachbarte erste und zweite Betriebskammern (C, D), die einen Bremsbetätigungsdruck über entsprechende Einlaßöffnungen (41, 42) während des Betriebsbremsvorganges aufnehmen sollen, und
eine Ausgangskammer (B), die mit einer Leitung zur Zuführung des Bremsbetätigungsdruckes an das Bremssystem des Anhängers verbunden werden soll,
wobei der Körper (51) eine Servoventilvorrichtung (84, 90, 64) aufweist, die durch den Druck in der ersten und/oder der zweiten Betriebskammer (C, D) gesteuert wird, wobei die Servoventilvorrichtung folgendes aufweist:
eine Dichtungsringeinheit (90), die im Körper (51) bewegbar ist und zum Zusammenwirken mit den ersten und zweiten Ventilsitzen (84, 64) ausgelegt ist, um die Verbindung zwischen der Ausgangskammer (B) und der Ablaßkammer (E) sowie zwischen der Ausgangskammer (B) und der Zuleitungskammer (A) zu steuern, und
erste und zweite Kolbensteuervorrichtungen (110, 120; 80, 83, 101), die jeweils zwischen der Ausgangskammer (B) und der ersten und zweiten Betriebskammer (C, D) abdichtend verschiebbar sind und unter den an jeweils die erste und die zweite Steuerkammer (C, D) zugeführten Betätigungsdrucken zur Steuerung der Stellung der Dichtungsringeinheit (90) ausgelegt sind, so daß während des Betriebsbremsvorganges die Ausgangskammer (B) von der Ablaßkammer (E) getrennt ist und mit der Zuleitungskammer (A) verbunden ist,
wobei der Körper (51) auch ein Abschlußventil (93, 68) mit einem Sitz (68) zwischen der Einlaßöffnung (11) und der Auslaßöffnung (12) der Zuleitungskammer (A) sowie einen Dichtungsring (93), der mit der Dichtungsringeinheit (90) der Servoventilvorrichtung (84, 90, 64) verbunden ist, aufweist,
wobei die zweite Kolbensteuervorrichtung (80, 83, 101) einen Steuerkolben (101) aufweist, der, wenn der Druckunterschied zwischen der zweiten Betriebskammer (D) und der Ausgangskammer (B) einen vorbestimmten Wert überschreitet, intervenieren kann, um die Dichtungsringeinheit (90) in eine Stellung zu drängen, in der sie das Abschlußventil (93, 68) schließt und den zweiten Sitz (64) der Servoventilvorrichtung (84, 90, 64) öffnet, was eine Verbindung zwischen der Auslaßöffnung (12) der Zuleitungskammer (A) und der Ausgangskammer (B) ermöglicht,
dadurch gekennzeichnet, daß die erste Kolbensteuervorrichtung zwei koaxiale Kolben (110, 120) aufweist, die jeweils an einem Ende sowie an dem entgegengesetzten Ende den Drucken in jeweils der ersten und der zweiten Betriebskammer (C, D) ausgesetzt sind und die zum Zusammenwirken mit der zweiten Kolbenvorrichtung (80, 83, 101) während des Betriebsbremsvorganges ausgelegt sind, so daß bei Auftreten eines Verlustes oder einer Verringerung des an die zweite Betriebskammer (D) zugeführten Druckes einer der koaxialen Kolben - unter dem Druck in der ersten Betriebskammer (C) - den Steuerkolben (101) in die Stellung drängen kann, in der er das Abschlußventil (93, 68) verschließt und den zweiten Sitz (64) der Servoventilvorrichtung (84, 90, 64) öffnet.

## Revendications

1. Agencement de valve pour un système de freinage pneumatique d'un tracteur du type ayant deux tuyaux, respectivement un tuyau d'amenée et un tuyau d'actionnement, pour commander le freinage d'une remorque, l'agencement comprenant un corps creux (51) dans lequel sont définis :
une chambre d'amenée (A) qui est destinée à être connectée à une source de pression au moyen d'une ouverture d'amenée (11) ménagée dans le corps (51) et à un tuyau d'amenée de pression au système de freinage de la remorque, au moyen d'une ouverture de sortie (12),
une chambre d'évacuation (E) qui peut communiquer avec l'atmosphère,
des première et deuxième chambres d'actionnement (C, D) adjacentes, destinées à recevoir une pression d'actionnement de frein par l'intermédiaire d'ouvertures d'entrée (41, 42) respectives, durant un freinage de service, et
une chambre de sortie (B) destinée à être connectée à un tuyau servant à fournir la pression d'actionnement de frein au système de freinage de la remorque,
le corps (51) ayant des moyens formant servo-valve (84, 90, 64), qui sont commandés par la pression régnant dans la première et/ou dans la deuxième chambre d'actionnement (C, D), les moyens formant servo-valve comprenant :
un agencement obturateur (90) déplaçable dans le corps (51) et adapté pour coopérer avec des premier et deuxième sièges de valve (84, 64), en vue de commander la communication entre la chambre de sortie (B) et la chambre d'évacuation (E) et entre la chambre de sortie (B) et la chambre d'amenée (A), et
des premier et deuxième moyens de commande de piston (110, 120; 80, 83, 101) qui sont coulissants de façon étanche entre la chambre de sortie (B) et les première et deuxième chambres d'actionnement (C, D) respectivement, et sont adaptés, sous les pressions d'actionnement respectivement fournies aux première et deuxième chambres de commande (C, D), pour commander la position de l'agencement obturateur (90), de manière que la chambre de sortie (B) soit déconnectée de la chambre d'évacuation (E) et connectée à la chambre d'amenée (A) durant le freinage de service,
le corps (51) ayant également une valve d'arrêt (93, 68) comprenant un siège (68), entre l'ouverture d'entrée (11) et l'ouverture de sortie (12) de la chambre d'amenée (A), et un obturateur (93) qui est associé à l'agencement obturateur (90) des moyens formant servo-valve (84, 90, 64),
le deuxième moyen de commande de piston (80, 83, 101) comprenant un piston de commande (101) qui, lorsque la différence de pression entre la deuxième chambre d'actionnement (D) et la chambre de sortie (B) dépasse une valeur prédéterminée, peut intervenir pour pousser l'agencement obturateur (90) vers une position dans laquelle il ferme la valve d'arrêt (93, 68) et ouvre le deuxième siège (64) du moyen formant servo-valve (84, 90, 64), ce qui permet d'établir une communication entre l'ouverture de sortie (12) de la chambre d'amenée (A) et la chambre de sortie (B),
caractérisé en ce que le premier moyen de commande de piston comprend deux pistons coaxiaux (110, 120), qui sont respectivement exposés, à une extrémité et à l'extrémité opposée, aux pressions régnant respectivement dans les première et deuxième chambres d'actionnement (C, D) et qui sont adaptés pour coopérer avec le deuxième moyen formant piston (80, 83, 101) durant le freinage de service, de manière que, dans le cas d'une perte ou d'une réduction de la pression fournie à la deuxième chambre d'actionnement (D), l'un des pistons coaxiaux - sous l'effet de la pression régnant dans la première chambre d'actionnement (C) - peut pousser le piston de commande (101) vers la position dans laquelle il ferme la valve d'arrêt (93, 68) et ouvre le deuxième siège (64) du moyen formant servo-valve (84, 90, 64).
